# EUROPÄISCHE PATENTSCHRIFT

(11) **EP 1 845 790 B1**
(45) Veröffentlichungstag und Bekanntmachung des Hinweises auf die Patenterteilung: **08.10.2008**
(21) Anmeldenummer: 05850251.9
(22) Anmeldetag: 10.12.2005
(51) Int. Cl.: A22B 5/00, A22C 17/00

(54) **VERFAHREN SOWIE ANORDNUNG ZUM BEARBEITEN VON SCHLACHTTIERKÖRPERHÄLFTEN**
METHOD AND ARRANGEMENT FOR PROCESSING SLAUGHTERED ANIMAL CARCASS HALVES
PROCEDE ET ENSEMBLE POUR TRAVAILLER DES MOITIES DE CORPS D'ANIMAUX DE BOUCHERIE

(30) Priorität: 14.12.2004 DE 102004060401
(43) Veröffentlichungstag der Anmeldung: 24.10.2007
(73) Patentinhaber: Banss Schlacht- und Fördertechnik GmbH, 35216 Biedenkopf (DE)
(72) Erfinder: BRIEL, Hermann, 35116 Hatzfeld/ Eifa (DE); SCHMIDT, Frank, 35232 Dautphetal (DE)
(74) Vertreter: Stoffregen, Hans-Herbert
(86) Internationale Anmeldenummer: PCT/EP2005/013265
(87) Internationale Veröffentlichungsnummer: WO 2006/063744

(56) Entgegenhaltungen:
- WO-A-01/67873
- DE-A1- 19 518 578
- FR-A- 2 689 373
- US-A- 4 557 014

## Beschreibung

Die Erfindung bezieht sich auf ein Verfahren zum Bearbeiten wie Zerlegen von Schlachttierkörperhälften, insbesondere Schweinehälften, wobei die Schlachttierkörperhälften durch den Wirkbereich einer Handhabungseinrichtung (Roboter) mittels einer Fördereinrichtung hängend und translatorisch gefördert und mittels eines von der Handhabungseinrichtung betätigten Werkzeugs wie Messer oder Säge auf einer sich entlang des Wirkbereichs der Handhabungseinrichtung erstreckenden Abstützung in abgestützter Position bearbeitet wird, wobei die Abstützung synchron mit der Fördervorrichtung durch den Wirkbereich der Handhabungseinrichtung bewegt wird, jede Schlachttierkörperhälfte auf der Abstützung mittels einer Fixiereinrichtung fixiert wird, die Schlachttierkörperhälfte vor der Bearbeitung mittels eines optischen Systems erfasst und hieraus gewonnene Daten zur Steuerung der Handhabungseinrichtung dieser zugeführt werden und die Bearbeitung während der Förderung der Schlachttierkörperhälfte erfolgt.

Auch nimmt die Erfindung Bezug auf eine Anordnung zum Bearbeiten wie Zerlegen einer Schlachttierkörperhälfte, insbesondere einer Schweinehälfte, umfassend eine Handhabungseinrichtung (Roboter) mit zumindest einem Bearbeitungswerkzeug wie Messer oder Säge sowie eine Fördervorrichtung, mittels der die Schlachttierkörperhälfte hängend und translatorisch durch den Wirkbereich der Handhabungseinrichtung förderbar ist, ein optisches System wie Digitalkamera oder Laserscanner mit Bildverarbeitungssystem zum Erfassen der Schlachttierkörperhälfte sowie eine sich entlang des Wirkbereichs der Handhabungseinrichtung erstreckende Abstützung, auf der die Schlachttierkörperhälfte während des Bearbeitens abgestützt und über eine Fixiereinrichtung fixiert ist, wobei die Abstützung synchron mit der Fördervorrichtung durch den Wirkbereich der Handhabungseinrichtung bewegbar ist.

Nach der US-A-4,557,014 werden Schlachttiere beim Zerlegen zwischen Gurten geführt, die synchron mit einem Förderer bewegt werden, von dem die Schlachttiere hängend durch den Wirkbereich von Sägen bewegbar sind, über die ausschließlich horizontale Schnitte zum abschnittsweisen Durchtrennen der Schlachttiere durchgeführt werden. Dabei werden die Gurte abschnittsweise von Rollenanordnungen geführt, um die Schlachttiere vertikal auszurichten und pendelnde Bewegungen zu unterbinden. Die Sägen selbst sind höhenverstellbar, um auf Schlachttiere unterschiedlicher Größe ausgerichtet zu werden.

Von Hand zu zerlegende Schlachttierkörperhälften werden nach der EP-A-0 668 018 auf schaufelförmigen Abstützungen abgestützt, die um Umlenkrollen geführt werden, von denen eine antreibbar ist. Die Geschwindigkeit eines die Schlachttierkörperhälften transportierenden Förderers und die der Abstützungen ist dabei gleich.

Die DE-A-39 27 145 bezieht sich auf ein Verfahren und eine Vorrichtung zum automatischen Zerlegen von auf einem Karussell fixierten Schlachttierkörpern. Dabei werden die Positionen der ausschließlich horizontal durchzuführenden Schnitte durch die Schlachttierkörper durch ein optisches System bestimmt.

Eine Vorrichtung zum lagedefinierten Fixieren von Schlachttierkörperhälften ist der DE-A-195 18 578 zu entnehmen. Hierzu werden die Schlachttiere von einem Gestell aufgenommen, von dem höhenverstellbare Fixierelemente ausgehen, um eine Anpassung an Schlachttiere unterschiedlicher Größen vorzunehmen. Die Größenerfassung erfolgt dabei über Lichtschranken.

Gegenstand der DE-A-2 421 339 ist ein Verfahren sowie eine Anordnung zum Verarbeiten gehäuteter Rumpfhälften von Rindern. Dabei ist vorgesehen, dass eine automatische Zerteilung und Knochenauslösung in mehreren unmittelbar aufeinander folgenden Schritten erfolgt.

Ein Verfahren sowie eine Anordnung zum Zerlegen von Schweinehälften sind der EP-B-1 263 292 zu entnehmen. Das Bearbeiten erfolgt dabei während des kontinuierlichen Transports der Schweinehälften von einer Beladeposition zu einer Entladeposition. Während des Transports sind die Schweinehälften an einer stationären Wand abgestützt, die sich entlang des Transportwegs erstreckt,

Eine Anordnung sowie ein Verfahren zum Zerlegen von Schweinehälften werden von der BANSS Schlacht- und Fördertechnik Gmbh, D - 35216 Biedenkopf, benutzt. Dabei werden Schweinehälften durch den Wirkbereich eines Roboters auf getrennten Förderbahnen transportiert, wobei die zu bearbeitende Schweinehälfte auf einer stationären Halteplatte fixiert wird. Zur Steuerung des Roboters erfolgt ein Messen der zu bearbeitenden Schweinehälften, mittels eines optischen Systems in Form eines 3D-Laserscanners. Über eine Auswertesoftware werden die Messdaten an die Robotersteuerung weitergeleitet.

Der DE-A-100 04 519 und WO-01/67873 sind Handhabungseinrichtungen in Form von Robotern zu entnehmen, mit denen Schlachttiere bearbeitet werden.

Der vorliegenden Erfindung liegt die Aufgabe zugrunde, ein Verfahren und eine Anordnung der Eingangs genannten Art so weiterzubilden, dass bei hohem Durchsatz überaus genau ein Bearbeiten der Schlachttierkörperhälften insbesondere in Form von Schweinehälften erfolgen kann, ohne dass ein aufwendiger konstruktiver Aufbau erforderlich ist. Dabei sollen die Schlachttierkörperhälften in eindeutiger Position zu der Handhabungseinrichtung ausrichtbar sein, ohne dass Einbußen beim Bearbeiten durch die Handhabungseinrichtung in Kauf genommen werden müssen. Auch soll der Bearbeitungsfluss durch Schlachttierkörperhälften unterschiedlicher Längen nicht gestört werden, wobei größenabhängig Schnitte in gewünschten Höhlen und Richtungen durchgeführt werden sollen.

Erfindungsgemäß wird die Aufgabe verfahrensmäßig im Wesentlichen dadurch gelöst, dass mehrere Schlachttierkörperhälften gleichzeitig auf der als Abstützfläche ausgebildeten Abstützung abgestützt werden, dass jede Schlachttierhälfte von einem gesonderten höhenverstellbaren Fixierelement der Fixiereinrichtung fixiert wird, das synchron mit der Abstützfläche mitbewegt wird, und dass das Fixierelement vor Fixieren der Schlachttierkörperhälfte auf eine Normhöhe eingestellt und zum Fixieren auf die Schlachttierkörperhälfte in Abhängigkeit von deren Länge auf eine gewünschte Höhe eingestellt wird.

Abweichend vom vorbekannten Stand der Technik wird die Schlachttierkörperhälfte während des Transports durch den Wirkbereich der Handhabungseinrichtung auf einer Abstützfläche abgestützt, die synchron mit der die Schlachttierkörperhälfte transportierenden Fördervorrichtung bewegt wird. Hierdurch ist eine unkontrollierte Positionsveränderung zwischen der Schlachttierkörperhälfte und der Handhabungseinrichtung während des Transports ausgeschlossen mit der Folge, dass ein hochpräzises Bearbeiten wie Zerlegen der Schlachtderkörperhälften während deren Transports durch den Wirkbereich der Handhabungseinrichtung erfolgen kann. Zusätzlich sieht die Erfindung vor, dass die Schlachttierkörperhälfte fixiert auf der Abstützfläche durch den Wirkbereich der Handhabungseinrichtuug gefördert wird. Hierzu ist eine Fixiereinrichtung vorgesehen, die synchron mit der Abstützfläche mitbewegt wird, jedoch mittels eines getrennt von der Fördervorrichtung angeordneten Transportmittels wie Riemen oder Kette bewegt wird. Dabei umfasst die Fixiereinrichtung ein Fixierelement, das die Schlachttierkörperhälfte gegen die Abstützfläche drückt Insbesondere wirkt unmittelbar auf den Kopf der Schlachttierkörperhälfte das Fixierelement ein, so dass dieses auch als Kopfhalter zu bezeichnen ist.

Um Schlachttierkörperhälften unterschiedlicher Langen derart zu fixieren, dass der Bearbeitungsbereich nicht abgedeckt wird, sieht die Erfindung vor, dass die Fixiereinrichtung ein höhenverstellbares Fixierelement umfasst, das vor Fixieren der Schlachttierkörperhälfte auf eine Normhöhe eingestellt und zum Fixieren auf die Schlachttierkörperhälfte in Abhängigkeit von deren Länge auf eine gewünschte Höhe eingestellt wird. Zum Fixieren ist insbesondere ein plattenförmiges Element vorgesehen, das über ein Druckelement wie Druckfeder oder -kolben an die Schlachttierkörperhälfte angelegt wird.

Durch die erfindungsgemäßen Maßnahmen ist stets sichergestellt, dass der Bereich der Schlachttierkörperhälfte unabhängig von deren Länge frei zugänglich ist, in dem ein Bearbeiten erfolgen soll. Hierdurch können Schnitte in gewünschten Richtungen, also nicht nur horizontal verlaufende, sondern insbesondere vertikal oder schräg verlaufende durchgeführt werden.

Insbesondere werden folgende Zerlegearbeiten von dem Roboter durchgeführt, und zwar auch vorzugsweise in der nachfolgenden Reihenfolge:
- Kotelett / Bauch: Schnitt vertikal von oben nach unten
- "Federknochen" / "Dornfortsätze" abschneiden: Schnitt vertikal von oben nach unten
- Rippen durchtrennen im Bereich des Brustbeins: Schnitt vertikal von oben nach unten
- Schulter ab-/ anschneiden: Schnitt horizontal
- Schinken ab-/anschneiden: Schnitt horizontal
- Beckenknochen durchschneiden: Schnitt schräg.

Grundsätzlich können alle auch von Hand durchführbaren Zerlegeschnitte mit dem Roboter ausgeführt werden.

Zur Erfassung der Länge der Schlachttierkörperhälfte und damit des Ausrichtens des Fixierelements kann das optische System verwendet werden, dessen Daten zur Steuerung der Handhabungseinrichtung genutzt werden. Es kann jedoch auch eine zusätzliche Messeinrichtung vorgesehen sein, mittels der Lage des Kopfbereichs oder ein anderer vorgegebener Bereich des Schlachttierkörpers bestimmt und aus entsprechenden Messdaten die Fixiereinrichtung in ihrer wirksamen Position eingestellt wird.

Um das Bearbeiten wie das Zerlegen der Schlachttierkörperhälfte zu erleichtern, sieht eine hervorzuhebende eigenerfinderische Weiterbildung vor, dass die Abstützfläche in einer zur Vertikalen geneigten Position verläuft. Dabei ist bodenseitiger Bereich der Abstützfläche näher zur Handhabungseinrichtung ausgerichtet als förderseitig verlaufender Bereich.

Eine Anordnung der eingangs genannten Art zeichnet sich dadurch aus, dass die Abstützung eine gleichzeitig mehrere Schlachttierkörperhälften flächig abstützende Abstützfläche ist, dass jeder Schlachttierkörperhälfte eine gesonderte synchron mit der Abstützfläche bewegbare Fixiereinrichtung zugeordnet ist, dass sämtliche Fixiereinrichtungen von einem umlaufenden Fördermittel ausgehen, dass im Verfahrweg jeder Fixiereinrichtung eine die Fixiereinrichtung höhenmäßig ausrichtende erste Führungseinrichtung angeordnet ist, dass die Fixiereinrichtung einen mit dem Fördermittel verbundenen Basisabschnitt mit einem zu diesem um eine entlang des Förderwegs des Fördermittels verlaufende Achse verschwenkbaren Halteabschnitt umfasst, von dem höhenverstellbar ein an die Schlachttierkörperhälfte anlegbares Fixierelement ausgeht, und dass im Verfahrweg der Fixiereinrichtung eine die Fixiereinrichtung nach der Bearbeitung der Schlachttierhälfte aus dem Wirkbereich mit der Schlachttierkörperhälfte verschwenkende zweite Führungseinrichtung angeordnet ist.

Um sicherzustellen, dass die Schlachttierkörperhälfte beim Bearbeiten quer zur Förderrichtung nicht ausgelenkt wird, ist vorgesehen, dass das Bahnmaterial handhabungsseitig zumindest im Wirkbereich der Handhabungseinrichtung entlang einer stationären Abstützung geführt ist.

Die synchron mit der Fördervorrichtung bewegbare Abstützfläche kann durch sich drehende Rollen gebildet werden. Somit bilden die sich drehenden Rollen eine scheinbar bewegbare Abstützfläche, die der erfindungsgemäßen Lehre entspricht.

Um ein sicheres Bearbeiten zu ermöglichen, ist vorgesehen, dass die Abstützfläche geneigt zur Vertikalen ausgerichtet ist. Dabei spannt die Abstützfläche eine Ebene auf, die in ihrem bodenseitigen Bereich im Vergleich zum fördervorrichtungsseitigen Bereich in Richtung zu der Handhabungseinrichtung hin versetzt verläuft.

Losgelöst hiervon ist vorgesehen, dass mehrere Fixiereinrichtungen von einem umlaufenden Fördermittel wie Riemen oder Ketten ausgehen und dass im Verfahrweg der Fixiereinrichtung eine die Fixiereinrichtung aus dem Wirkbereich mit der Schlachttierkörperhälfte verschwenkende erste Führungseinrichtung angeordnet ist. Ferner ist im Verfahrweg der Fixiereinrichtung eine diese höhenmäßig ausrichtende zweite Führungseinrichtung angeordnet.

Jede Fixiereinrichtung kann aus einem mit dem Förder- oder Transportmittel verbundenen Basisabschnitt und einem zu diesem um eine entlang des Transportmittels verlaufende Achse verschwenkbaren Halteabschnitt bestehen, von dem höhenverstellbar ein an eine Schlachttierkörperhälfte anlegbares vorzugsweise plattenförmiges Fixierelement ausgeht, das insbesondere auf den Kopf der Schlachttierkörperhälfte einwirkt.

Das Fixierelement ist mit dem vorzugsweise als Rahmen ausgebildeten Halteabschnitt verbunden und zwar vorzugsweise über zumindest ein Stab- oder Rohrelement. Dieses oder ein weiteres Stab- oder Rohrelement wie Zahnstange kann in seiner bzw. ihrer insbesondere vertikal verlaufenden Verstellrichtung selbsthemmend von dem Halteabschnitt geführt aufgenommen werden, so dass eine Höhenverstellung mit Hilfsmitteln möglich ist, ohne dass beim Fixieren der Schlachttierkörperhälfte ein unkontrolliertes Verrücken erfolgt.

Von dem Basisabschnitt kann ein den Halteabschnitt zu dessen Verschwenken kraftbeaufschlagendes Element wie Druckfeder oder -kolben ausgehen. Des Weiteren weist der Halteabschnitt ein erstes Gleitelement wie eine erste Rolle auf, die mit der eine Führungsbahn aufweisenden ersten Führungseinrichtung wechselwirkt, die sich entlang des Förderwegs der Fixiereinrichtung außerhalb des Wirkbereichs der Handhabungseinrichtung erstreckt.

Der Förderweg der Schlachttierkörperhälfte weist einen vor dem Wirkbereich der Handhabungseinrichtung verlaufenden Einlaufbereich und einen nach dem Wirkbereich der Handhabungseinrichtung verlaufenden Auslaufbereich auf, wobei im Einlaufbereich die Führungsbahn eine erste Verlaufsänderung derart aufweist, dass der Halteabschnitt in Richtung der Schlachttierkörperhälfte verschwenkbar ist. Im Auslaufbereich des Förderwegs der Schlachttierkörperhälfte ist eine zweite Verlaufsänderung der Führungsbahn derart vorgesehen, dass das erste Gleitelement wie die Rolle mit der Führungsbahn wechselwirkt und während der weiteren Förderung von der Schlachttierkörperhälfte wegschwenkbar ist.

Die erste bzw. zweite Verlaufsänderung ist dabei vorzugsweise als rampenförmig verlaufender Abschnitt der Führungsbahnen ausgebildet, die ihrerseits bodenseitige Fläche eines Profilträgers oder einer Leiste wie Aufahrleiste sein kann, die sich parallel zum Transportweg der Fixiereinrichtungen erstreckt.

Die zweite Fühnmgseinrichtung verläuft abschnittsweise entlang der ersten Führungseinrichtung und parallel zum Transportweg der Fixiereinrichtungen, wobei die zweite Führungseinrichtung einen rampenförmigen Einlaufabschnitt umfasst, der in einen parallel oder in etwa parallel zu der ersten Führungseinrichtung verlaufenden Zwischenabschnitt übergeht, der seinerseits in einer höhenverstellbaren Ausrichteinrichtung mündet. Mit dem Einlaufabschnitt und dem Zwischenabschnitt sowie der Ausrichteinrichtung wechselt ein mittelbarer oder unmittelbar von dem Fixierelement ausgehendes zweites Gleitelement wie eine zweite Rolle derart, dass über den Einlaufabschnitt und dem Zwischenabschnitt das Fixierelement auf eine Normhöhe ausgerichtet wird, um sodann während des Bewegens des zweiten Gleitelements durch einen Führungsabschnitt der Ausrichteinrichtung auf eine Höhe verstellt zu werden, die der Fixierposition einer Schlachttierkörperhälfte in Abhängigkeit von deren Länge entspricht.

Weitere Einzelheiten, Vorteile und Merkmale der Erfindung ergeben sich nicht nur aus den Ansprüchen, den diesen zu entnehmenden Merkmalen - für sich und/oder in Kombination ; sondern auch aus der nachfolgenden Beschreibung eines der Zeichnung zu entnehmenden bevorzugten Ausführungsbeispiels.

Es zeigen:
- Fig. 1: in perspektivischer Darstellung eine Anordnung eines Bereiche einer Schlachtlinie, in dem Schlachttierkörperhälften mittels eines Roboters bearbeitet werden,
- Fig. 2: einen Ausschnitt aus Fig. 1,
- Fig. 3: eine weitere perspektivische Darstellung der Anordnung gem. Fig. 1,
- Fig. 4: einen Ausschnitt aus Fig. 3,
- Fig. 5: eine Detaildarstellung einer Fixiereinrichtung,
- Fig. 6: eine Vorderansicht der Anordnung gem. Fig. 1,
- Fig. 7: ein Detail der Fig. 6,
- Fig. 8: eine Seitenansicht der Anordnung gem. Fig. 1 und
- Fig. 9: eine Draufsicht der Unordnung gem. Fig. 1.

In zunehmenden Umfang erfolgt ein automatisches Zerlegen von schlachttieren. Hierzu werden Schlachttierkörperhälften wie Schweinehälften zunächst optisch gemessen, um sodann die entsprechenden Daten an eine Steuerung eines Roboters weiterzugeben, der das Zerlegen durchführt. Das optische Messen kann z.B. mittels eines Laserscanners wie 3D-Laserscanners erfolgen. Andere, optische System kommen gleichfalls in Frage. Eine entsprechende Technik ist z.B. in der EP-B-1 263 292 oder in dem Prospekt DE-Z.: BANSS Meat Technology, Innovations for Industrial and Meat Processing Plants, BANSS Schlacht- und Fördertechnik GmbH, Industriestraße 4, D - 35216 Biedenkopf, beschrieben. Insoweit wird ausdrücklich auf die entsprechenden Darlegungen Bezug genommen.

Um ein überaus genaues Zerlegen von Schlachttierkörperhälften bei gleichzeitig hohem Durchsatz vornehmen zu können, werden die nachstehend als Schweinehälften bezeichneten Schlachttierkörperhälften 10, 12 mittels einer rein prinzipiell angedeuteten Fördervorrichtung 13 hängend durch den Wirkbereich eines Roboters 14 transportiert. Hierzu gehen von den Hinterbeinen 16 der Schweinehälften 10, 12 Schlaufen und Haken 15 aus, die auf einer Rohrbahn 17ausgehängt sind, die von Mitnehmern der Fördervorrichtung 13 wie eines Kettenförderers erfasst werden. Dabei erfolgt mittels des Förderers 13 zumindest während des Zerlegens eine translatorische oder im Wesentlichen translatorisch Bewegung der Schweinehälften 10, 12, die folglich entlang einer Geraden oder einer Kurvenbahn mit großem Radius geführt werden.

Ferner werden die Schweinehälften 10, 12 mit ihrer Halbierungsfläche 18 dem Roboter 14 zugewandt und durch dessen Wirkbereich gefördert.

Vor dem Zerlegen werden die Schweinehälften 10, 12 mit einem oder mehreren Scannern 19, 21 optisch erfasst und sodann die optischen Werte mittels einer Bildverarbeitung digitalisiert, um mittels dieser den Roboter 14 bzw. ein von diesem betätigtes Werkzeug zu steuern.

Um ein präzises Zerlegen der Schweinehälften 10, 12 sicherzustellen, werden die Schweinhälften 10, 12 im Wirkbereich des Roboters 14 auf einer als flächige Abstützung dienende Abstützfläche 20 abgestützt, die synchron mit der Bewegung der Schweinhälften 10, 12 mitbewegt wird. Mit anderen Worten wird die Abstützfläche, 20 synchron mit dem die Schweinehälften 10, 12 fördernden Förderer 13 durch den Wirkbereich des Roboters 14 bewegt.

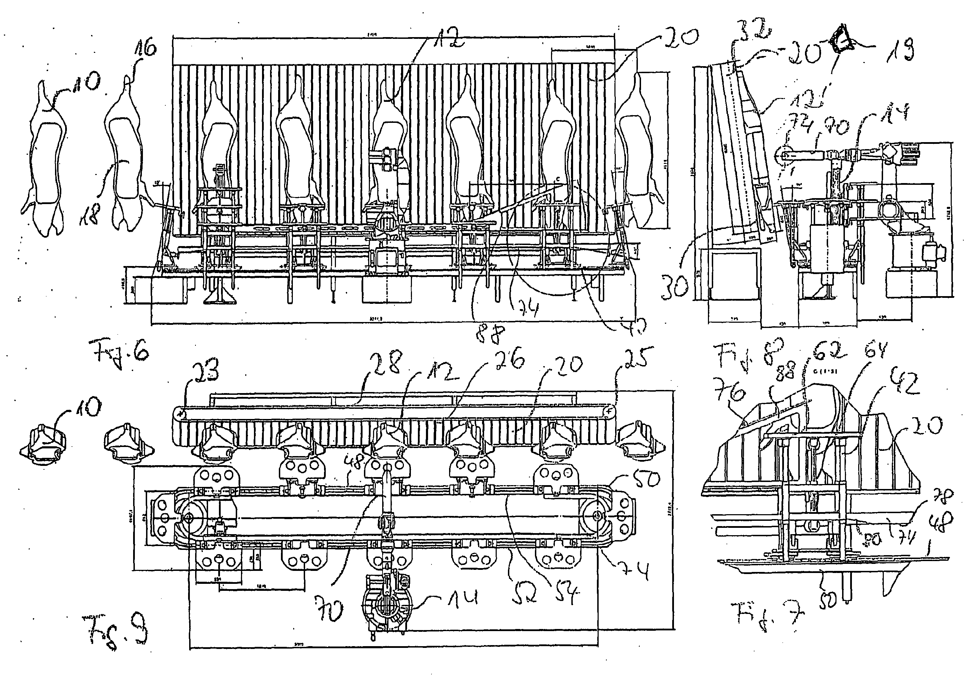

Die Abstützfläche- 20 kann dabei durch Abschnitte einer Lamellenwand gebildet werden, die um Umlenkrollen 23, 25 geführt wird. Andere Konstruktionen zur Ausbildung der Abstützfläche 20 sind gleichfalls möglich. Wesentlich ist jedoch, dass während des Bearbeitens der Schweinehälften 10, 12 diese nicht quer zur Förderrichtung als in Bezug auf die Fig. 6 nicht in die Zeichenebene hinein ausweichen können. Hierzu kann die die Abstützfläche 20 zur Verfügung stellende Bahn entlang einer Abstützung geführt werden, die sich entsprechend der Darstellung der Fig. 9 zwischen vorderem Abschnitt 26 und hinterem Abschnitt 28 des die Abstützfläche 20 bildenden Bahnmaterials erstreckt.

An Stelle eines Bahn- bzw. Lamellenmaterials könnte die Abstützfläche 20 auch durch eine Rollenbahn gebildet werden, die das synchrone Mitbewegen mit der Fördervorrichtung 13 für die Schweinehälften 10, 12 simuliert.

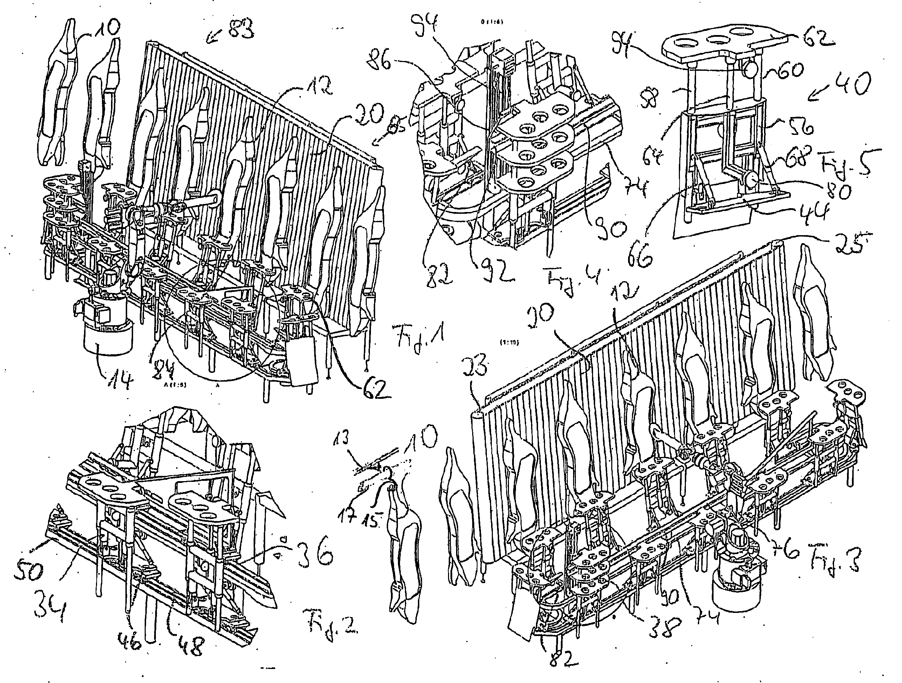

Wie sich insbesondere aus den Fig. 1, 3 und 8 ergibt, verläuft die Abstützfläche 20, auf der gleichzeitig mehrere Schweinehälften 10, 12 in nachstehender Weise fixierbar sind, geneigt zur Vertikalen, wobei bodenseitiger Bereich 30 in Richtung des Roboters 14 hin versetzt verläuft und somit fördervorrichtungsseitig verlaufender Bereich 32 der Abstützfläche 20 zurückversetzt ist.

Damit die Schweinehälften 10, 12 während des Bearbeitens durch den Roboter 14 nicht seitlich ausweichen können, werden die Schweinehälften 10, 12 während ihres Transports auf der Arbeitsfläche 20 über Fixiereinrichtungen 34, 36, 38, 40, 42 in Richtung der Abstützfläche 20 kraftbeaufschlagt. Die Fixiereinrichtungen 34, 36, 38, 40, 42 werden synchron mit den Schweinehälften 10, 12 und damit der Förderer 13 bewegt, so dass während des Fixierens eine Relativverschiebung nicht erfolgen kann.

Wie sich aus den Fig. ergibt, bestehen die Fixiereinrichtungen 34, 36, 38, 40, 42 aus einem Basisabschnitt 44, 46, der mit einem umlaufenden Transportmittel 48 wie Kette oder Band verbunden ist, der in einer umlaufenden Führungsbahn 50 verläufe. Die Führungsbahn 50 beschreibt dabei die Geometrie eines Ovals mit parallel zueinander verlaufenden Längsseiten 52, 54, die sich parallel zu der von der Arbeitsfläche 20 aufgespannten Ebene erstrecken.

Von dem Basisabschnitt 44, 46 geht ein zu dem Basisabschnitt 44, 46 um eine parallel zum Förderweg des Transportmittels 48 verlaufende Achse verschwenkbarer Rahmen 56 aus, von dem vertikal oder im Wesentlichen vertikal verschiebbar zwei erste Rohrelemente 58, 60 ausgehen, die mit einem vorzugsweise plattenförmigen Fixierelement 62 auch Kopfhalter genannt - verbunden sind, das senkrecht zu den Rohren 58, 60 verläuft. Ferner geht von dem Fixerelement 62 ein zweites Rohrelement 64 z.B. in Form einer Zahnstange aus, das selbsthemmend in dem Halteabschnitt 56 verläuft. Dabei ist die Kraft der Selbsthemmnis des parallel zu den ersten Rohrelementen 58, 60 verlaufenden zweiten Rohrelements 62 derart ausgelegt, dass zur gewünschten Höheneinstellung des Fixierelements 62 ein vertikales Verschieben möglich ist, jedoch beim Anliegen an einer der Schweinehälften 10, 12 eine Unverrückbarkeit gegeben ist. Das kontrollierte vertikale Verstellen, also die Höhenausrichtung des Fixierelements 62 wird nachstehend näher erläutert.

Von dem Basisabschnitt 44 gehen des Weiteren Druckfedern oder -kolben 66, 68 aus, über die der Halteabschnitt 56 und damit das Fixierelement 62 der Fixiereinrichtung 34, 36, 38, 40, 42 von der Führungsbahn 50 weg, also nach außen in Richtung der Schweinehälften 10, 12 kraftbeaufschlagbar ist, wodurch ein Anliegen an einer der Schweinehälften 10, 12 bei gleichzeitiger automatischer Anpassung auf die Abmessung der jeweiligen Schweinehälfte 10, 12, die zu fixieren ist, erfolgt. Das Fixieren der Schweinehälften 10, 12 erfolgt dabei im Wirkbereich des Roboters 14. Wirkbereich bedeutet dabei der Bereich, in dem der Roboter 14 die Schweinehälfte 10, 12 in gewünschtem Umfang bearbeitet. Dabei können z. B. horizontale und zur Horizontalen geneigte und insbesondere vertikal verlaufende Schnitte durchgeführt werden (siehe Ausrichtung der Säge 72 in Fig. 1, 3, 8). Auch gehört zum Wirkbereich derjenige, in dem die Schweinehälften 10, 12 optisch gemessen werden. Ganz allgemein ist unter Wirkbereich der gesamte Bereich zu verstehen, in dem die Schweinehälften 10, 12 fixxiert auf der Abstützfläche 20 anliegen.

Um im Wirkbereich des Roboters 14 das Fixierelement 62 an einer der Schweinehälften 10, 12 anliegen zu lassen, jedoch außerhalb des Wirkbereichs zu den Schweinehälften 10, 12 zu beabstanden, zum das Fördern der Schweinehälften, 10, 12 nicht zu behindern, und um das Fixierelement 62 in Abhängigkeit von der Länge der zu fixierenden Schweinehälfte 10, 12 auf eine Höhe einzustellen, die eine gewünschte Zugänglichkeit des von einem Arm 70 des Roboters 14 ausgehenden Werkzeugs wie der Säge 72 sicherstellt, sind eine erste Führungseinrichtung 74 und eine zweite Führungseinrichtung 76 nachstehender Konstruktionen vorgesehen.

Die erste Führungseinrichtung 74 wird durch einen Träger 76 oder ein Profil oder ein entsprechendes Element gebildet, das bzw. die unterseitig eine Führungsbahn 78 für eine erste Rolle 80 bildet, die von dem Rahmen 56 ausgeht, der zu dem Basisabschnitt 40 der Fixiereinrichtung 34, 36, 38, 40, 42 verschwenkbar ist Die Führungsbahn 78 und damit die erste Führungseinrichtung 74 ist zwischen Einlaufbereich 82 und Auslaufbereich 84 der durch den Wirkbereich des Roboters 14 zu transportierenden Schweinehälften 10, 12 unterbrochen. Dabei weist die Führungsbahn 78 sowohl im Übergangsbereich zum bzw. vom Wirkbereich des Roboters 14 jeweils einen rampenförmigen Verlauf auf, der in Fig. 3, 4 und 7 mit den Bezugszeichen 80, 82 gekennzeichnet ist.

Durch den Verlauf der Führungsbahn 78, die einem offenen Oval entspricht und parallel zu der Führungsbahn 50 des Transport- oder Fördermittels für die Fixiereinrichtimgen 34, 36, 38, 40, 42 verläuft, und durch die rampenförmigen Abschnitte 80, 82 wird erreicht, dass der Halteabschnitt 56 der jeweiligen Fixiereinrichtung 34, 36, 38, 40, 42 im Wirkbereich des Roboters 14, also in dem Bereich, in dem ein Fixieren der Schweinehälften 10, 12 auf der Arbeitsfläche 20 erfolgt und vorzugsweise die Schweinehälften 10, 12 optisch gemessen und aus einer zurückgezogenen Stellung über die Druckfedern oder -kolben 66, 68 in Richtung der zu fixierenden Schweinehälften 10, 12 kraftbeaufschlagt verschwenkt werden. Hierdurch werden die Schweinehälften 10, 12 auf der Abstützfläche 20 fixiert. Dies erfolgt unabhängig von der Erstreckung der Schweinehälften 10, 12 quer zur Förderrichtung, da erwähntermaßen eine automatische Abstandsanpassung über die Druckfedern oder -kolben 66, 68 sichergestellt ist.

Um die Fixiereinrichtung 34, 36, 38, 40, 42 so zu positionieren, dass das vorzugsweise plattenförmige Fixierelement 62 im Kopfbereich (Bereich 84 in Fig. 1) an der Schweinehälfte 12 anliegt, so dass das Bearbeiten der Halbierungsfläche 18 nicht beeinträchtigt werden kann, wird mittels der zweiten Führungseinrichtung 76 und einer Ausrichteinrichtung 86 das Fixierelement 62, also im Ausführungsbeispiel der Kopfhalter, höhenmäßig ausgerichtet.

Die zweite Führungseinrichtung 76 erstreckt sich im Bereich des Abschnitts 52 des Transportwegs der Fixiereinrichtungen 34, 36, 38, 40, 42 und besteht aus einem rampenförmigen ersten Abschnitt 88 und einem parallel zu dem Abschnitt 52 verlaufenden horizontal oder im Wesentlichen horizontalen Zwischenabschnitt 90, der in einen Führungsabschnitt 92 der Ausrichteinrichtung 86 übergeht.

Der rampenförmige äußere Abschnitt 88 weist eine Einlassöffnung derart auf, dass unabhängig von zuvor erfolgter Positionierung eines mit einer Schweinehälfte 10, 12 wechselwirkenden Fixierelements 42 ein von dem Fixierelement 62 ausgehendes zweites Rollenelement 94 über den rampenförmigen Abschnitt 88 geführt und somit beim weiteren Transport der Fixiereinrichtung 34, 36, 38,40, 42 diese in eine Grundposition heruntergedrückt wird, die durch den horizontal verlaufenden Zwischenabschnitt 90, d. h. dessen Verlauf vorgegeben wird.

Am Ende des Zwischenabschnitts 92 geht sodann beim weiteren Fördern der Fixiereinrichtung 34, 36, 38, 40, 42 die zweite Rolle 94 in den Führungsabschnitt 92 der Ausrichteinrichtung 86 über, die sodann entlang einer Säule 96 verstellt und auf eine Höhe ausgerichtet wird, um das Fixierelement 62 auf eine Höhe einzustellen, in der die zu fixierende Schweinehälfte 10, 12 gegen die Abstützfläche 20 gedrückt werden soll. Die Höhe wird dabei in Abhängigkeit von der Länge der zu fixierenden Schweinehälften 10, 12 festgelegt, die zuvor insbesondere durch einen optischen Sensor wie Scanner gemessen wird.

Durch die erfindungsgemäße Lehre ist gewährleistet, dass ein hochpräzises Bearbeiten der Schweinehälften 10, 12 erfolgen kann, wobei aufgrund des Bearbeitens während der Förderung ein hoher Durchsatz erzielbar ist. Selbstverständlich wird die erfindungsgemäße Lehre nicht verlassen, wenn kein kontinuierlicher Transport der Schweinehälften 10, 12 durch den Wirkbereich des Roboters 14 erfolgt, vielmehr die Schweinehälften während des Bearbeitens angehalten oder getaktet gefordert wird. Hierdurch wird die Genauigkeit des Bearbeitens nicht beeinflusst, da unabhängig hiervon eine Synchronisierung der Bewegung der Schweinehälften 10, 12, der Abstützfläche 20 sowie der Fixiereinrichtung 34, 36, 38, 40, 42 gegeben ist

## Patentansprüche

1. Verfahren zum Bearbeiten wie Zerlegen von Schlachttierkörperhälften (10, 12), insbesondere Schweinehälften, wobei die Schlachttierkörperhälften durch den Wirkbereich einer Handhabungseinrichtung (Roboter) (14) mittels einer Fördereinrichtung (13) hängend und translatorisch gefordert und mittels eines von der Handhabungseinrichtung betätigten Werkzeugs (72) wie Messer oder Säge auf einer sich entlang des Wirkbereichs der Handhabungseinrichtung erstreckenden Abstützung in abgestützter Position bearbeitet wird, wobei die Abstützung (20) synchron mit der Fördervorrichtung durch den Wirkbereich der Handhabungseinrichtung bewegt wird, jede Schlachttierkörperhälfte auf der Abstützung mittels einer Fixiereinrichtung (34, 36, 38, 40, 42) fixiert wird, die Schlachttierkörperhälfte vor der Bearbeitung mittels eines optischen Systems (19) erfasst und hieraus gewonnene Daten zur Steuerung der Handhabungseinrichtung dieser zugeführt werden und die Bearbeitung während der Förderung der Schlachttierkörperhälfte erfolgt,
**dadurch gekennzeichnet,**
**dass** mehrere Schlachttierkörperhälften (10, 12) gleichzeitig auf der als Abstützfläche ausgebildeten Abstützung (20) abgestützt werden, dass jede Schlachttierhälfte von einem gesonderten höhenverstellbaren Fixierelement (62) der Fixiereinrichtung (34, 36, 38, 40, 42) fixiert wird, das synchron mit der Abstützfläche mitbewegt wird, und dass das Fixierelement vor Fixieren der Schlachttierkörperhälfte auf eine Normhöhe eingestellt und zum Fixieren auf die Schlachttierkörperhälfte in Abhängigkeit von deren Länge auf eine gewünschte Höhe eingestellt wird.

2. Verfahren nach Anspruch 1,
**dadurch gekennzeichnet,**
**dass** die Fixiereinrichtung (34, 36, 38, 40, 42) mit einem vorzugsweise plattenförmigen Element (62) über zumindest ein Druckelement (66, 68) an die Schlachttierkörperhälfte (10, 12), insbesondere an dessen Kopf, angelegt wird.

3. Verfahren nach Anspruch 1 oder 2,
**dadurch gekennzeichnet,**
**dass** über das optische System (19) oder eine weitere Messeinrichtung ein vorgegebener Bereich der Schlachttierkörperhälfte (10, 12) wie Kopfbereich erfasst und hieraus gewonnene Messdaten zur Einstellung der Fixiereinrichtung (34, 36, 38, 40, 42) in ihrer auf die Schlachttierkörperhälfte einwirkenden Position eingestellt wird.

4. Verfahren nach zumindest Anspruch 1,
**dadurch gekennzeichnet,**
**dass** die Schlachttierkörperhälfte (10, 12) in einer geneigt zur Vertikalen verlaufenden Position durch den Wirkbereich der Handhabungseinrichtung (14) gefördert wird, wobei das Bearbeiten insbesondere vertikale Schnitte umfasst.

5. Anordnung zum Bearbeiten wie Zerlegen einer Schlachttierkörperhälfte, insbesondere einer Schweinehälfte (10, 12), umfassend eine Handhabungseinrichtung (Roboter) (14) mit zumindest einem Bearbeitungswerkzeug (72) wie Messer oder Säge sowie eine Fördervorrichtung (13), mittels der die Schlachttierkörperhälfte hängend und translatorisch durch den Wirkbereich der Handhabungseinrichtung förderbar ist, ein optisches System wie Digitalkamera oder Laserscanner (19) mit Bildverarbeitungssystem zum Erfassen der Schlachttierkörperhälfte sowie eine sich entlang des Wirkbereichs der. Handhabungseinrichtung erstreckende Abstützung (20), auf der die Schlachttierkörperhälfte während des Bearbeitens abgestützt und über eine Fixiereinrichtung fixiert ist, wobei die Abstützung synchron mit der Fördervorrichtung durch den Wirkbereich der Handhabungseinrichtung (14) bewegbar ist,
**dadurch gekennzeichnet,**
**dass** die Abstützung (20) eine gleichzeitig mehrere Schlachttierkörperhälften flächig abstützende Abstützfläche (20) ist, dass jeder Schlachttierkörperhälfte (10, 12) eine gesonderte synchron mit der Abstützfläche bewegbare Fixiereinrichtung (34, 36, 38, 40, 42) zugeordnet ist, dass sämtliche Fixiereinrichtungen von einem umlaufenden Fördermittel (48) ausgehen, dass im Verfahrweg jeder Fixiereinrichtung eine die Fixiereinrichtung höhenmäßig ausrichtende erste Führungseinrichtung (76) angeordnet ist, dass die Fixiereinrichtung einen mit dem Fördermittel verbundenen Basisabschnitt (44) mit einem zu diesem um eine entlang des Förderwegs des Fördermittel verlaufende Achse verschwenkbaren Halteabschnitt (56) umfasst, von dem höhenverstellbar ein an die Schlachttierkörperhälfte anlegbares Fixierelement (62) ausgeht, und dass im Verfahrweg der Fixiereinrichtung eine die Fixiereinrichtung nach der Bearbeitung der Schlachttierhälfte aus dem Wirkbereich mit der Schlachttierkörperhälfte verschwenkende zweite Führungseinrichtung (74) angeordnet ist.

6. Anordnung nach Anspruch 5,
**dadurch gekennzeichnet,**
**dass** die Abstützfläche (20) Außenfläche eines umlaufenden Bahnmaterials oder einer umlaufenden Lamellenwand ist.

7. Anordnung nach Anspruch 5 oder 6,
**dadurch gekennzeichnet,**
**dass** das Bahnmaterial handhabungsseitig zumindest im Wirkbereich der Handhabungseinrichtung (14) entlang einer stationären Abstützung geführt ist.

8. Anordnung nach Anspruch 5 oder 6,
**dadurch gekennzeichnet,**
**dass** die Abstützfläche durch sich drehende Rollen gebildet ist.

9. Anordnung nach zumindest einem der Ansprüche 5 bis 8,
**dadurch gekennzeichnet,**
**dass** die Abstützfläche (20) geneigt zur Vertikalen ausgerichtet ist.

10. Anordnung nach zumindest einem der Ansprüche 5 bis 9,
**dadurch gekennzeichnet,**
**dass** die Abstützfläche (20) eine Ebene aufspannt, die in ihrem bodenseitigen Bereich im Vergleich zum fördervorrichtungsseitigen Bereich (30) in Richtung zu der Handhabungseinrichtung (14) hin versetzt verläuft.

11. Anordnung nach zumindest Anspruch 5,
**dadurch gekennzeichnet,**
**dass** das Fördermittel (48) der Fixiereinrichtung (34, 36, 38, 40, 42) ein Riemen oder eine Kette ist.

12. Anordnung nach zumindest Anspruch 5,
**dadurch gekennzeichnet,**
**dass** das Fixierelement (62) vorzugsweise plattenförmig, insbesondere als Kopfhalter ausgebildet ist.

13. Anordnung nach zumindest einem der Ansprüche 5 bis 12,
**dadurch gekennzeichnet,**
**dass** von dem vorzugsweise als Rahmen (80) ausgebildeten Halteabschnitt (56) zumindest ein mit dem Fixierelement (62) verbundenes Stab- oder Rohrelement (58, 60) ausgeht.

14. Anordnung nach zumindest einem der Ansprüche 5 bis 13,
**dadurch gekennzeichnet,**
**dass** das Stab- oder Rohrelement (58, 60) oder ein weiteres Stab- oder Rohrelement (64) wie Zahnstange in seiner bzw. ihrer insbesondere vertikal verlaufenden Verstellrichtung selbsthemmend von dem Halteabschnitt (56) geführt aufgenommen ist.

15. Anordnung nach zumindest einem der Ansprüche 5 bis 14,
**dadurch gekennzeichnet,**
**dass** von dem Basisabschnitt (44) ein den Halteabschnitt zu dessen Verschwenken kraftbeaufschlagendes Element wie Druckfeder oder -kolben (66, 68) ausgeht.

16. Anordnung nach zumindest einem der Ansprüche 5 bis 15,
**dadurch gekennzeichnet,**
**dass** von dem Halteabschnitt (56) ein erstes Gleitelement wie eine erste Rolle (80) ausgeht, die mit der eine Führungsbahn (78) aufweisenden ersten Führungseinrichtung (74) wechselwirkt, die sich entlang des Förderwegs der Fixiereinrichtung ((34, 36, 38, 40, 42) außerhalb des Wirkbereichs der Handhabungseinrichtung (14) erstreckt.

17. Anordnung nach zumindest einem der Ansprüche 5 bis 16,
**dadurch gekennzeichnet,**
**dass** der Förderweg der Schlachttierkörperhälfte (10, 12) einen vor dem Wirkbereich der Handhabungseinrichtung (14) verlaufenden Einlaufbereich (83) und einen nach dem Wirkbereich der Handhabungseinrichtung verlaufenden Auslaufbereich (85) aufweist und dass im Einlaufbereich die Führungsbahn eine erste Verlaufsänderung derart aufweist, dass der Halteabschnitt (56) in Richtung der Schlachttierkörperhälfte (10, 12) verschwenkbar ist.

18. Anordnung nach zumindest einem der Ansprüche 5 bis 17,
**dadurch gekennzeichnet,**
**dass** im Auslaufbereich (85) des Förderwegs der Schlachttierkörperhälfte (10, 12) die Führungsbahn (78) eine zweite Verlaufsänderung derart aufweist, dass das erste Gleitelement (80) mit der Führungsbahn wechselwirkt und während der weiteren Förderung von der Schlachttierkörperhälfte (10,12) wegschwenkbar ist.

19. Anordnung nach zumindest einem der Ansprüche 5 bis 18,
**dadurch gekennzeichnet,**
**dass** die erste und/oder zweite Verlaufsänderung als rampenförmig verlaufender Abschnitt (80, 82) der Führungsbahn (78) ausgebildet ist.

20. Anordnung nach zumindest einem der Ansprüche 5 bis 19,
**dadurch gekennzeichnet,**
**dass** die Führungsbahn (78) bodenseitige Fläche eines Profilträgers oder einer Leiste ist, die sich parallel zum Transportweg der Fixiereinrichtungen (34, 36, 38, 40, 42) erstreckt.

21. Anordnung nach zumindest einem der Ansprüche 5 bis 20,
**dadurch gekennzeichnet,**
**dass** die erste Führungseinrichtung (76) sich abschnittsweise entlang der zweiten Führungseinrichtung (74) und parallel zum Transportweg der Fixiereinrichtungen (34, 36, 38, 40, 42) erstreckt und dass die erste Führungseinrichtung einen rampenförmigen Einlaufabschnitt (88) aufweist, der in einen parallel oder in etwa parallel zu der zweiten Führungseinrichtung verlaufenden Zwischenabschnitt (90) übergeht, der seinerseits in eine höhenverstellbare Ausrichteinrichtung (86) übergeht.

22. Anordnung nach zumindest einem der Ansprüche 5 bis 21,
**dadurch gekennzeichnet,**
**dass** mittelbar oder unmittelbar von dem Fixierelement (62) ein zweites Gleitelement wie eine zweite Rolle (94) ausgeht, die mit der ersten Führungseinrichtung (76) über den Einlaufabschnitt (88) und den Zwischenabschnitt (90) geführt wechselwirkt.

23. Anordnung nach zumindest einem der Ansprüche 5 bis 22,
**dadurch gekennzeichnet,**
**dass** die Ausrichteinrichtung (86) einen Führungsabschnitt (92) für das zweite Gleitelement einer Länge derart aufweist, dass während des Bewegens des zweiten Gleitelements durch den Führungsabschnitt die Ausrichteeinrichtung auf eine Höhe verfahrbar ist, die die Position des Fixierelements (62) zum Fixieren der Schlachttierkörperhälfte (10, 12) vorgibt.

24. Anordnung nach zumindest einem der Ansprüche 5 bis 23,
**dadurch gekennzeichnet,**
**dass** vor dem Einlaufbereich (83) eine die Schlachttierkörperhälfte (10, 12) erfassende Messeinrichtung wie zumindest ein Sensor angeordnet ist, deren Ausgangssignale der Ausrichteeinrichtung (86) zu deren Höhenverstellung zuführbar sind.

## Claims

1. Method for processing such as carving of slaughtered animal carcass halves (10, 12), in particular sides of pork, where the carcass halves are conveyed hanging head-down and in translational manner through the working section of a handling device (robot) (14) by a conveyor device (13) and processed by a tool (72) such as a knife or saw operated by the handling device in a supported position on a support extending along the working section of the handling device, where the support (20) is moved synchronously with the conveyor device through the working section of the handling device, each carcass half is fixed on the support by a fixing device (34, 36, 38, 40, 42), the carcass half is scanned before processing by an optical system (19) and data thereby obtained is supplied to the handling device for control of the latter, and processing takes place during conveying of the carcass half,
**wherein**
several carcass halves (10, 12) are supported simultaneously on the support (20) designed as a supporting surface, wherein each carcass half is fixed by a separate height-adjustable fixing element (62) of the fixing device (34, 36, 38, 40, 42) synchronously moved together with the supporting surface, and wherein the fixing element is set to a standard height before fixing of the carcass half and set to a required height for fixing onto the carcass half depending on the length of the latter.

2. Method according to Claim 1,
**wherein**
the fixing device (34, 36, 38, 40, 42) is applied with a preferably plate-like element (62) to the carcass half (10, 12), in particular to its head, by at least one pressing element (66, 68).

3. Method according to Claim 1 or Claim 2,
**wherein**
a predetermined area of the carcass half (10, 12) such as the head area is measured by the optical system (19) or by another measuring device and the measurement data thereby obtained is used for setting the fixing device (34, 36, 38, 40, 42) in its position acting on the carcass half.

4. Method according to Claim 1,
**wherein**
the carcass half (10, 12) is conveyed through the working section of the handling device (14) in a position inclined from the vertical, with processing comprising in particular vertical cuts.

5. Arrangement for processing such as carving of slaughtered animal carcass halves (10, 12), in particular sides of pork, comprising a handling device (robot) (14) with at least one processing tool (72) such as a knife or saw and a conveyor device (13) by which the carcass half can be conveyed hanging head-down and in translational manner through the working section of the handling device, an optical system such as a digital camera or laser scanner (19) with image processing system for recording the carcass half, and a support (20) extending along the working section of the handling device on which the carcass half is supported during processing and is fixed by a fixing device, where the support is movable synchronously with the conveyor device through the working section of the handling device (14),
**wherein**
the support (20) is a supporting surface (20) supporting several carcass halves at the same time over a large contact area, wherein each carcass half (10, 12) is assigned a separate fixing device (34, 36, 38, 40, 42) movable synchronously with the supporting surface, wherein all fixing devices extend from a continuous conveying means (48), wherein a first guide device (76) aligning the height of the fixing device is arranged in the movement path of each fixing device, wherein the fixing device comprises a base section (44) connected to the conveying means with a holding section (56) swinging relative to said base section about an axis running along the conveying path of the conveying means, from which holding section extends a fixing element (62) height-adjustably applicable to the carcass half, and wherein a second guide device (74) swinging the fixing device with the carcass half out of the working section following processing of the carcass half is arranged in the movement path of the fixing device.

6. Arrangement according to Claim 5,
**wherein**
the supporting surface (20) is the outer surface of a continuous track material or a continuous lamellar wall.

7. Arrangement according to Claim 5 or Claim 6,
**wherein**
the track material on the handling side is guided at least in the working section of the handling device (14) along a stationary support.

8. Arrangement according to Claim 5 or Claim 6,
**wherein**
the supporting surface is formed by rotating rollers.

9. Arrangement according to at least one of Claims 5 to 8,
**wherein**
the supporting surface (20) is aligned inclined to the vertical.

10. Arrangement according to at least one of Claims 5 to 9,
**wherein**
the supporting surface (20) spans a plane which in its bottom area is off-set in the direction of the handling device (14) when compared to the area (30) on the conveying device side.

11. Arrangement according to at least Claim 5,
**wherein**
the conveying means (48) of the fixing device (34, 36, 38, 40, 42) is a belt or chain.

12. Arrangement according to at least Claim 5,
**wherein**
the fixing element (62) is designed preferably plate-like, in particular as a head holder.

13. Arrangement according to at least one of Claims 5 to 12,
**wherein**
at least one bar or tube element (58, 60) connected to the fixing element (62) extends from the holding section (56) designed preferably as a frame (80).

14. Arrangement according to at least one of Claims 5 to 13,
**wherein**
the bar or tube element (58, 60) or a further bar or tube element (64) such as a rack is held in guided and self-locking manner by the holding section (56) in its in particular vertically running adjustment direction.

15. Arrangement according to at least one of Claims 5 to 14,
**wherein**
an element such as a compression spring or piston (66, 68) exerting force on the holding section in order to swing it extends from the base section (44).

16. Arrangement according to at least one of Claims 5 to 15,
**wherein**
a first sliding element such as a first roller (80) extends from the holding section (56) and interacts with the first guide device (74) having a guide track (78) and extending along the conveying path of the fixing device (34, 36, 38, 40, 42) outside the working section of the handling device (14).

17. Arrangement according to at least one of Claims 5 to 16,
**wherein**
the conveying path of the carcass half (10, 12) has an entry area (83) in front of the working section of the handling device (14) and an exit area (85) behind the working section of the handling device, and wherein the guide track in the entry area includes a first course change such that the holding section (56) can be swung in the direction of the carcass half (10, 12).

18. Arrangement according to at least one of Claims 5 to 17,
**wherein**
the guide track (78) includes in the exit area (85) of the conveying path of the carcass half (10, 12) a second course change such that the first sliding element (80) interacts with the guide track and can be swung away from the carcass half (10, 12) during further conveying.

19. Arrangement according to at least one of Claims 5 to 18,
**wherein**
the first and/or second course change is designed as a section (80, 82) of the guide track (78) in ramp form.

20. Arrangement according to at least one of Claims 5 to 19,
**wherein**
the guide track (78) is the bottom surface of a profiled beam or strip extending parallel to the conveying path of the fixing devices (34, 36, 38, 40, 42).

21. Arrangement according to at least one of Claims 5 to 20,
**wherein**
the first guide device (76) extends in sections along the second guide device (74) and parallel to the conveying path of the fixing devices (34, 36, 38, 40, 42), and wherein the first guide device has a ramp-like entry section (88) that merges into an intermediate section (90) running parallel or approximately parallel to the second guide device and in turn merging into a height-adjustable aligning device (86).

22. Arrangement according to at least one of Claims 5 to 21,
**wherein**
a second sliding element such as a second roller (94) extends indirectly or directly from the fixing element (62) and interacts in a guided manner with the first guide device (76) over the entry section (88) and the intermediate section (90).

23. Arrangement according to at least one of Claims 5 to 22,
**wherein**
the aligning device (86) has a guide section (92) for the second sliding element of a length such that during the movement of the second sliding element through the guide section the aligning device is movable to a height predetermining the position of the fixing element (62) for fixing the carcass half (10, 12).

24. Arrangement according to at least one of Claims 5 to 23,
**wherein**
in front of the entry area (83) a measuring device such as at least one sensor for recording the carcass half (10, 12) is arranged, the output signals of which can be supplied to the aligning device (86) in order to adjust its height.

## Revendications

1. Procédé de transformation, en particulier de découpage de moitiés d'animal de boucherie (10, 12) telles que des moitiés de porc, sachant que les moitiés d'animal de boucherie sont transportées de manière suspendue et translatoire par un convoyeur (13) à travers la zone d'action d'un dispositif de manipulation (robot) (14) et transformées, appuyées contre un élément d'appui s'étendant le long de la zone d'action du dispositif de manipulation, par un outil (72), tel qu'un couteau ou une scie, actionné par le dispositif de manipulation, sachant que l'appui (20) est déplacé de manière synchrone au convoyeur à travers la zone d'action du dispositif de manipulation, que chaque moitié d'animal de boucherie est fixée sur l'appui au moyen d'un dispositif de fixation (34, 36, 38, 40, 42), que les moitiés d'animal de boucherie ont été saisies, avant la transformation, au moyen d'un système optique (19), que les données ainsi obtenues ont été transmises au dispositif de manipulation pour permettre la commande de celui-ci et que la transformation s'effectue pendant le déplacement de la moitié d'animal de boucherie,
**caractérisé en ce**
**que** plusieurs moitiés d'animal de boucherie (10, 12) sont maintenues en même temps sur l'appui (20) conçu comme une surface d'appui, que chaque moitié d'animal de boucherie est fixée par un élément de fixation (62) indépendant et réglable en hauteur du dispositif de fixation (34, 36, 38, 40, 42), lequel élément est déplacé de manière synchrone à la surface d'appui et que l'élément de fixation est réglé à une hauteur normalisée avant la fixation de la moitié d'animal de boucherie puis à une hauteur souhaitée déterminée en fonction de la longueur de la moitié d'animal de boucherie pour fixer cette dernière.

2. Procédé selon la revendication 1,
**caractérisé en ce**
**que** le dispositif de fixation (34, 36, 38, 40, 42) est appuyé, par un élément (62) de préférence en forme de plaque et par l'intermédiaire d'au moins un élément de pression (66, 68), contre la moitié d'animal de boucherie (10, 12), en particulier contre la tête.

3. Procédé selon la revendication 1 ou 2,
**caractérisé en ce**
**qu'**une zone prédéfinie de la moitié d'animal de boucherie (10, 12) telle que la tête est saisie par le système optique (19) ou un autre dispositif de mesure et que les données ainsi obtenues permettent le réglage du dispositif de fixation (34, 36, 38, 40, 42) dans la position de traitement de la moitié d'animal de boucherie.

4. Procédé selon au moins la revendication 1,
**caractérisé en ce**
**que** la moitié d'animal de boucherie (10, 12) est transportée à travers la zone d'action du dispositif de manipulation (14) dans une position inclinée par rapport à la verticale, sachant que la transformation comprend en particulier des découpes verticales.

5. Dispositif de transformation, en particulier de découpage d'une moitié d'animal de boucherie, en particulier d'une moitié de porc (10, 12), comprenant un dispositif de manipulation (robot) (14) avec au moins un outil de transformation (72) tel qu'un couteau ou une scie, ainsi qu'un convoyeur (13), au moyen duquel la moitié d'animal de boucherie peut être transportée à travers la zone d'action du dispositif de manipulation de manière suspendue et translatoire, un système optique, tel qu'une caméra numérique ou un scanner laser (19) avec système de traitement d'images, pour la saisie de la moitié d'animal de boucherie, ainsi qu'un appui (20) s'étendant le long de la zone d'action du dispositif de manipulation contre lequel est appuyée la moitié de porc pendant la transformation, laquelle est fixée par un dispositif de fixation, sachant que l'appui peut être déplacé de façon synchrone au convoyeur à travers la zone d'action du dispositif de manipulation (14),
**caractérisé en ce**
**que** l'appui (20) est une surface d'appui (20) plane maintenant plusieurs moitiés d'animal de boucherie en même temps, qu'un dispositif de fixation (34, 36, 38, 40, 42) indépendant pouvant se déplacer de façon synchrone à la surface d'appui est associé à chaque moitié d'animal de boucherie (10, 12), que tous les dispositifs de fixation partent d'un dispositif de convoyage (48) circulaire, qu'un premier dispositif de guidage (76) orientant le dispositif de fixation en fonction de la hauteur est disposé sur le parcours de chaque dispositif de fixation, que le dispositif de fixation comprend une section de base (44) reliée au dispositif de convoyage avec une section de retenue (56) pouvant pivoter par rapport à la section de base autour d'un axe s'étendant le long du parcours du dispositif de convoyage, de laquelle section de retenue part un élément de fixation (62) réglable en hauteur pouvant être appliqué contre la moitié d'animal de boucherie, et qu'est disposé, sur le parcours du dispositif de fixation, un second dispositif de guidage (74) faisant pivoter le dispositif de fixation avec la moitié d'animal de boucherie en dehors de la zone d'action après la transformation de celle-ci.

6. Dispositif selon la revendication 5,
**caractérisé en ce**
**que** la surface d'appui (20) est la surface extérieure d'un matériau en bande ou d'une paroi en lamelles en mouvement circulaire.

7. Dispositif selon la revendication 5 ou 6,
**caractérisé en ce**
**que** le matériau en bande est conduit du côté du dispositif de manipulation et au moins dans la zone d'action du dispositif de manipulation (14) le long d'un appui stationnaire.

8. Dispositif selon la revendication 5 ou 6,
**caractérisé en ce**
**que** la surface d'appui est formée par des galets rotatifs.

9. Dispositif selon au moins une des revendications 5 à 8,
**caractérisé en ce**
**que** la surface d'appui (20) est orientée de manière inclinée par rapport à la verticale.

10. Dispositif selon au moins une des revendications 5 à 9,
**caractérisé en ce**
**que** la surface d'appui (20) ouvre un plan qui, dans sa zone du côté du sol, s'étend, en comparaison à la zone du côté du convoyeur (30), de manière décalée dans la direction du dispositif de manipulation (14).

11. Dispositif selon au moins la revendication 5,
**caractérisé en ce**
**que** le dispositif de convoyage (48) du dispositif de fixation (34, 36, 38, 40, 42) est une courroie ou une chaîne.

12. Dispositif selon au moins la revendication 5,
**caractérisé en ce**
**que** l'élément de fixation (62) est conçu de préférence sous forme de plaque, en particulier sous forme de retenue pour la tête.

13. Dispositif selon au moins une des revendications 5 à 12,
**caractérisé en ce**
**qu'**au moins un élément en forme de barre ou de tube (58, 60) relié à l'élément de fixation (62) part de la section de retenue (56) conçue de préférence sous forme de cadre (80).

14. Dispositif selon au moins une des revendications 5 à 13,
**caractérisé en ce**
**que** l'élément en forme de barre ou de tube (58, 60) ou un autre élément en forme de barre ou de tube (64), tel qu'une crémaillère, est, dans sa direction de déplacement s'étendant en particulier à la verticale, logé et guidé de manière autobloquante par la section de retenue (56).

15. Dispositif selon au moins une des revendications 5 à 14,
**caractérisé en ce**
**qu'**un élément, tel qu'un ressort ou piston de pression (66, 68), exerçant une force sur la section de retenue permettant son pivotement, part de la section de base (44).

16. Dispositif selon au moins une des revendications 5 à 15,
**caractérisé en ce**
**qu'**un premier élément de glissement tel qu'un premier galet (80) part de la section de retenue (56), lequel galet fonctionne en interaction avec le premier dispositif de guidage (74) présentant une glissière (78), ce dispositif de guidage s'étendant à l'extérieur de la zone d'action du dispositif de manipulation (14) le long du trajet parcouru par le dispositif de fixation (34, 36, 38, 40, 42).

17. Dispositif selon au moins une des revendications 5 à 16,
**caractérisé en ce**
**que** le trajet parcouru par la moitié d'animal de boucherie (10, 12) présente une zone d'entrée (83) s'étendant avant la zone d'action du dispositif de manipulation (14) et une zone de sortie (85) s'étendant après la zone d'action du dispositif de manipulation, et que la glissière présente, dans la zone d'entrée, une première modification de trajet de telle sorte que la section de retenue (56) peut être pivotée en direction de la moitié d'animal de boucherie (10, 12)

18. Dispositif selon au moins une des revendications 5 à 17,
**caractérisé en ce**
**que** la glissière (78) présente dans la zone de sortie (85) du trajet parcouru par la moitié d'animal de boucherie (10, 12) une seconde modification de trajet de telle sorte que le premier élément de glissement (80) fonctionne en interaction avec la glissière et est éloigné par pivotement au cours du trajet restant de la moitié d'animal de boucherie (10, 12).

19. Dispositif selon au moins une des revendications 5 à 18,
**caractérisé en ce**
**que** la première et/ou la seconde modification(s) de trajet est (sont) conçu(es) telle une section (80, 82) de la glissière (78) s'étendant sous forme de rampe.

20. Dispositif selon au moins une des revendications 5 à 19,
**caractérisé en ce**
**que** la glissière (78) est une surface côté sol d'une poutre ou d'une baguette qui s'étend parallèlement au parcours de transport des dispositifs de fixation (34, 36, 38, 40, 42).

21. Dispositif selon au moins une des revendications 5 à 20,
**caractérisé en ce**
**que** le premier dispositif de guidage (76) s'étend en partie le long du second dispositif de guidage (74) et parallèlement au parcours de transport des dispositifs de fixation (34, 36, 38, 40, 42), et que le premier dispositif de guidage présente une zone d'entrée (88) en forme de rampe qui se prolonge en une section intermédiaire (90) s'étendant parallèlement ou plus ou moins parallèlement au second dispositif de guidage, laquelle section intermédiaire se prolonge elle-même par le dispositif d'alignement (86) réglable en hauteur.

22. Dispositif selon au moins une des revendications 5 à 21,
**caractérisé en ce**
**qu'**un second élément de glissement tel qu'un second galet (94) part directement ou indirectement de l'élément de fixation (62), lequel galet conduit par la section d'entrée (88) et la section intermédiaire (90) fonctionne en interaction avec le premier dispositif de guidage (76).

23. Dispositif selon au moins une des revendications 5 à 22,
**caractérisé en ce**
**que** le dispositif d'alignement (86) présente une section de guidage (92) pour le second élément de glissement d'une longueur telle que, pendant le déplacement du second élément de glissement par la section de guidage, le dispositif d'alignement peut être déplacé à une hauteur déterminant la position de l'élément de fixation (62) pour la fixation de la moitié d'animal de boucherie (10, 12).

24. Dispositif selon au moins une des revendications 5 à 23,
**caractérisé en ce**
**qu'**est disposé, avant la zone d'entrée (83), un dispositif de mesure enregistrant la moitié d'animal de boucherie (10, 12) tel qu'au moins un capteur dont les signaux de sortie alimentent le dispositif d'alignement (86) pour le réglage de sa hauteur.
